# EUROPEAN PATENT APPLICATION

(11) **EP 4 586 425 A1**
(43) Date of publication of application: **16.07.2025**
(21) Application number: 24151018.9
(22) Date of filing: 09.01.2024
(51) Int. Cl.: H02G 5/00, B60R 16/02

(54) **DOUBLE BUSBAR DEVICE WITH SHIELDING**

(71) Applicant: Intercable Automotive Solutions GmbH, 39031 Bruneck (IT)
(72) Inventor: BAUMGARTNER, Christoph, 39031 Bruneck (IT)
(74) Representative: Hernandez, Yorck

(57) **Abstract**

The disclosure relates to a double busbar device (1) for a vehicle, in particular for an electric vehicle, having a first busbar unit (2) which has an insulating first sheath layer element (2b); and having a second busbar unit (3) which has an insulating second sheath layer element (3b), the first and second busbar units (2, 3) being arranged insulated from one another by means of the sheath layer elements (2b, 3b) and following a course of the double busbar device (1); and with a summation shielding unit (4) with a tubular shielding element (4a) made of solid metal, wherein in a cross-section transverse to the course the first and second busbar units (2, 3) are in mechanical contact with an inner surface (4b) of the summation shielding unit (4) over a large area with their outer surface (2c, 3c) in order to realize an improved, in particular a simplified, heavy-duty current routing in a vehicle.

## Description

### Background

The disclosure relates to a double busbar device for a vehicle, in particular for an electric vehicle, having a first busbar unit which has an insulating first sheathing layer element, and a second busbar unit which has an insulating second sheathing layer element, the first and second busbar units being arranged insulated from one another by means of the sheathing layer elements and jointly following a course of the double busbar device.

In the field of vehicles, especially vehicles with electric drive motors (electric vehicles for short), busbars, i.e. rigid power cables, are becoming more popular due to the ever-increasing voltages and currents. Typically, these are power lines with a round or essentially rectangular cross-section, which are available by the meter including an insulating sheath layer in various diameters and materials such as aluminum or copper in a (solid) conductor core of the busbar. The busbars are connected to other current-carrying components in respective contact areas stripped from the insulating sheath layer, for example at flat-pressed ends of the respective busbars with fixing holes.

To protect sensitive electronic components, the power lines can be fitted with a shielding unit. The shielding units typically have a flexible braided shielding element that is subsequently pulled over the power lines. Particularly in the case of busbars with a round cross-section, a shielding tubular element made of a solid metal (e.g. aluminum or copper) is often applied around the insulating layer directly during the production of the respective insulated busbar. As a result, the corresponding electrically insulated and electromagnetically shielded busbar is available by the meter. This bulk material can also be bent as such and thus adapted to a given route of the cable in the vehicle.

It is well known that a large number of power cables are required in vehicles. For technical reasons, more and more of the power cables are designed as busbars, which are also referred to as conductor rails.

### Overview

The task is therefore to improve current routing in vehicles, especially in electric vehicles, and in particular to achieve simplified, highly resilient current routing.

This task is solved by the independent claims. Advantageous embodiments are apparent from the dependent claims, the description and the figures.

One aspect relates to a double busbar device for a vehicle, in particular for an electric vehicle. The vehicle can be a land-bound vehicle such as a motor vehicle, for example a passenger car, a truck or a motorcycle, but also an air-bound vehicle such as a quadrocopter or a water-bound vehicle such as a ship. An electrically powered vehicle can be a vehicle with an electric drive motor, such as an electric car.

The double busbar device has a (in particular exactly one) first busbar unit with an electrically insulating first sheath layer element and a (in particular exactly one) second busbar unit with an electrically insulating second sheath layer element. The sheath layer elements are made in particular from a plastic such as PA-12 or XLPE. The first and second busbar units (which also may be referred to as conductor rail units) are electrically insulated from each other at least by means of the sheathing layer elements and are preferably also arranged at each other (preferably with parts of their respective outer surfaces abutting against each other) and together follow a course of the double busbar device. The course results from the application in the vehicle and is typically a curved (non-rectilinear) course, but can also be rectilinear in sections or completely rectilinear. Further units can be arranged between the first and second busbar unit as described below.

The double busbar device can also have more than two busbar units. For example, it can have a third busbar unit. In operation, the first and second busbar units can thus correspond to positive and negative poles, for example, and the third busbar unit to a neutral conductor (earthing). The third busbar unit can be arranged between the first two busbar units. The double busbar unit can also have additional busbar units with which currents can be conducted through the double busbar unit independently of the first two busbar units. In this case, the double busbar unit can also be referred to as a multi busbar unit. Correspondingly, the different busbar units can have different diameters.

Units arranged between respective (first and second, but also first, second, third and/or additional) busbar units can also comprise a functional unit, for example a cooling-functional unit. The cooling-functional unit can be hollow, which has the advantage that a fluid flow, preferably an air flow, can be directed through the double busbar device for cooling. Corresponding connection elements for connection to a cooling fluid supply can be arranged on such a hollow cooling-functional unit. As an alternative to the hollow design, the cooling-functional unit can be solid, which has the advantage of being thinner. In both cases, improved heat distribution in the double busbar device prevents local overheating and damage. To prevent wrinkling of the sheath layer elements, one or more respective sliding-functional unit(s) can be provided as alternative or supplementary functional unit(s).

The double busbar device can be a high-voltage double busbar device. High-voltage voltage can be, for example, a voltage of at least 60V, preferably at least 200V, particularly preferably at least 380V and very particularly preferably at least 780V. The high-voltage voltage can be a DC voltage. In this case, the double busbar device is a direct-current double busbar device. The double busbar device can also be designed for high currents, particularly preferably for currents of more than 10A, preferably more than 100A.

The double busbar device has a summation shielding unit (which may also refered to as a sum shield) with a tubular shielding element made of solid metal, which is designed to electrically shield the busbar units in relation to an environment. The summation shielding unit with the tubular shielding element thus serves to protect electronic components in the environment, in particular in the vehicle, from electromagnetic emissions of the busbar units. The first and second busbar units are in mechanical contact with an inner surface of the summation shielding unit over a large area of their respective outer surface, in particular with half or more than half of their respective outer surface, at least in sections along the course, preferably over a large part of the tubular shielding element along the course or over the entire tubular shielding element along the course, when viewed in a cross-section transverse to the course. The respective outer surface is in particular the outer surface of the respective sheath layer element. Further units arranged between the first and second busbar unit can, for example, be in mechanical contact with the inner surface of the summation shielding unit on a side surface oriented in the width direction defined below. A cavity remaining between the first and second busbar unit and the summation shielding unit, in which the summation shielding unit does not abut against one of the busbar units, can also be designed for a cooling flow of a fluid flow, preferably an air flow. For example, corresponding connection elements can be provided for this purpose.

This has the advantage that a compact, safe and resilient current routing is achieved in the vehicle. On the one hand, the contact of the summation shield unit with (in cross-section) a large part of the respective outer surface improves heat dissipation from the current-carrying busbar units into an environment of the double busbar device, thus preventing overheating and thus achieving a resilient and at the same time safe current conduction. The tubular shield element made of solid metal, for example an extruded profile made of aluminum or another suitable metal, allows the summation shield unit to exert contact pressure on the sheath layer elements, which further improves heat dissipation and counteracts air pockets between the summation shield unit and the busbar units, as well as between the two busbar units, which hinder heat dissipation. At the same time, the contact pressure of the busbar shielding unit against the busbar units and the busbar units against each other prevents creases, distortions and thus damage to the electrically insulating sheathing layer elements between the busbar units and between the busbar units and the busbar shielding unit when the double busbar device is bent (which is necessary to achieve a curved path), as the different units slip less against each other. This in turn counteracts local overheating and electrical malfunctions. As a result, the current routing can be made particularly compact. Ideally, the proportion of the respective outer surface of the busbar unit that is in contact with the summation shield unit is as large as possible, i.e. it can be over 52%, over 55% or over 60%, for example.

In one embodiment, it is provided that the busbar units are flat busbar units. In particular, a width of the respective busbar unit measured transversely to the course of the double busbar device in a width direction is at least twice as large as a thickness of the respective busbar unit measured transversely to the course and the width in a thickness direction, preferably at least three times as large or at least four times as large. This has the advantage that a particularly compact current routing is achieved and the bending behavior of the double busbar device is particularly advantageous.

Preferably, the busbar units are arranged in mechanical contact at each other with a respective flat side which is oriented along the thickness direction. The orientation of a side or surface is determined by its normal vector. The flat sides of the two busbar units arranged at each other are thus oriented antiparallel. This arrangement optimizes, i.e. reduces, the circumference of the double busbar device in terms of a compact design. In addition, the material required for the summation shield unit is reduced, resulting in weight savings. In cross-section, the required side lengths of the summation shield unit also come closer together (the cross-section of the summation shield unit becomes more square-like), which improves the bending behavior of the double busbar device and leads to increased contact pressure on the respective sheath layer elements.

Particularly preferably, the busbar units each have two rounded side surfaces that are diametrically opposed in the cross-section transverse to the course, which connect the opposing flat sides. This makes it possible to achieve a particularly resilient and crease-resistant contact between the sheath layer elements and a (in use) current-carrying conductor core and a particularly high and uniform contact pressure of the summation shield unit on the busbar units. In particular, the side surfaces can be rounded circularly with a radius that is half the respective thickness. This optimizes the distribution of the forces that occur, especially when bending the double busbar device, and thus contributes to compact, safe and resilient current routing in the vehicle.

Round busbar units are an alternative to flat busbar units. Here, the summation shield unit can be brought into even better contact with the individual busbar units. This is because a smaller proportion of the outer surface of the respective busbar units is in contact and therefore in contact with the other busbar unit, and therefore a larger proportion of the respective outer surfaces can be brought into contact with the summation shielding unit. The busbar units can also follow the course of the double busbar device at a distance >zero from each other, which may end up in an 8-like diameter. However, this results in less favorable bending behavior and greater space consumption.

In a further embodiment, it is provided that the first and/or the second busbar unit is bent away from the respective other busbar unit with a respective end section in one or two end regions of the double busbar device, in which the busbar units protrude beyond the summation shielding unit, in a plane, preferably the width plane. This facilitates the electrical contacting of the double busbar device in the end sections. The large-area contact of the summation shield unit on the busbar units facilitates precise deformation and thus precise arrangement of the end sections due to the lack of play of the busbar units in the summation shield unit, which also contributes to compact, safe and resilient current routing in the vehicle. A contact surface can be arranged in the end section, in particular with a contact-surface insert such as a contact-surface rivet. Here in particular, a precisely defined position of the end sections and, for example, holes intended for the contact-surface insert, helps to improve the current conduction.

In another embodiment, it is provided that the course has one or more curves in one or more planes. Thus, for example, one or more curves of the course may be in one plane and one or more curves of the course may be in another plane. The proposed double busbar device is particularly advantageous here, as it allows a large number of the established power lines in the vehicle to be replaced, making the power routing in the vehicle more compact, safer and more resilient.

In one embodiment, it is provided that the summation shielding unit is in mechanical contact with more than half of the outer side of the first and second busbar unit with its inner surface over a large part of its length along the course, in particular over at least 80% of its length along the course, preferably over the entire length along the course, in the cross-section transverse to the course. The summation shield unit thus encompasses the busbar units circumferentially by more than 180°, preferably by more than 185°, particularly preferably by more than 190°. With the method described below, this can also be achieved with the aforementioned curves in one or more planes of the double busbar device. This results in particularly reliable shielding and heat dissipation and increases the bonding strength of the double busbar device by clamping the individual units to the summation shield unit and thus to each other.

In another embodiment, it is provided that the summation screen unit has a length of at least 50 cm, preferably at least 100 cm and particularly preferably at least 250 cm along the course. This can also be achieved with the method described below for the aforementioned curves in one or more planes of the double busbar device. Due to the large achievable length, a particularly large number of the established power lines in the vehicle can be replaced with the double busbar device described here. This results in particularly reliable shielding and heat dissipation.

A further aspect relates to a vehicle, in particular an electric vehicle with a double busbar device according to any of the embodiments described. The double busbar device can be mounted outside a battery arrangement, for example outside a housing of the traction batteries and/or a body space enclosing the traction batteries.

Another aspect relates to a method of manufacturing a double busbar device for a vehicle, in particular for an electric vehicle. The double busbar device has a first busbar unit with an insulating first sheath layer element and a second busbar unit insulated from the first busbar unit with an insulating second sheath layer element and a summation shielding unit with a tubular shielding element made of solid metal.

One process step is to provide the unbent and thus at least substantially straight first and second busbar units. A subsequent further process step is to insert the two busbar units into the unbent and thus at least substantially straight tubular shielding element made of solid metal, whereby there is a clearance between the busbar units (in particular those busbar units arranged in mechanical contact with one another) and the tubular shielding element.

This is followed by the process step of a first rolling of the tubular shielding element onto the busbar units, in which the clearance between the busbar units and the tubular shielding element is reduced to zero in at least one direction, for example the above-mentioned thickness direction, so that in a cross-section transverse to a course of the double busbar device, a first part of the inner surface of the summation shielding unit is in contact with the busbar units. The first part can in particular be a large part, for example at least 50% or more than 50% or at least 65% or at least 80% or at least 95% of the inner surface. After the first rolling, the process step of a second rolling of the tubular shielding element against the busbar units takes place, in which a further part of the inner surface of the summation shielding unit, which differs from the first part, is brought into contact with the busbar units. The first and further part of the inner surface together then correspond in cross-section transversely to the course of the shielded double busbar device to a great part, in particular more than half of the (respective) outer surface of the first and second busbar unit. The two busbar units are thus embraced or clasped in cross-section by the summation shielding unit. The first and second rolling is carried out by a first and second rolling device respectively. Rolling in at least two process steps (which can also be carried out in a combined rolling device with the two rolling devices) leads to a particularly reliable pressing of the busbar shielding unit against the busbar units.

It may be provided that the further part of the inner surface is brought into contact with the busbar units during the second rolling in areas of the busbar units whose orientations converge. Accordingly, the inner surface in the further part is at least partially convex, i.e. partially or completely convex. This particularly strengthens the cohesion of the different units of the double busbar device and thus the advantages described above.

Corresponding to the double busbar device described, a further process step after the first and second rolling can be an adapting of the course of the double busbar device to a predetermined course with one or more curves in one or more planes by a bending. The reduced or non-existent play between the different units of the double busbar device reduces the risk of wrinkling or damage to the sheath layer elements and of inclusions that reduce heat dissipation.

In a particularly advantageous embodiment, it is provided that the first rolling and/or the second rolling is a step-by-step rolling, in which the clearance is gradually reduced to zero in several successive sub-rolling steps. Due to the particularly high contact pressures that can be achieved in this way, the different units of the double busbar device can be brought into particularly reliable contact with one another.

Advantages and advantageous embodiments of the latter aspects correspond to the advantages and advantageous embodiments described for the former aspect and vice versa.

The described features and combinations of features, including those of the general introduction, as well as the features and combinations of features disclosed in the figure description or the figures alone can be used not only alone or in the described combination, but also with other features or without some of the disclosed features, without departing from the scope of the invention. Consequently, embodiments which are not explicitly shown and described in the figures, but which can be generated by separately combining the individual features disclosed in the figures, are also part of the invention. Therefore, embodiments and combinations of features which do not comprise all features of an originally formulated independent claim are also to be regarded as disclosed. Furthermore, embodiments and combinations of features which deviate from the combinations of features or go beyond those described in the dependencies of the claims are to be regarded as disclosed.

In the context of the present disclosure, the term "transverse/along" can be understood as "at least substantially vertical/parallel", i.e. "vertical/parallel" or "substantially vertical/parallel", i.e. vertical/parallel except for a predetermined deviation. The predetermined deviation can, for example, be at most 15°, preferably at most 5°, particularly preferably at most 3°. Accordingly, "oppositely oriented" in the context of the present disclosure can be understood as "at least substantially oppositely oriented", i.e. "at least substantially antiparallel oriented". The restriction "essentially" can also refer to a maximum permissible deviation specified in percentage terms, for example at most 15%, preferably at most 5%, particularly preferably at most 3%.

### Detailed description

Exemplary embodiments are described in more detail below with reference to schematic drawings. Therein,
- Fig. 1: shows an exemplary embodiment of a double busbar device in a perspective view and in a cross-sectional view;
- Fig. 2: shows the embodiment of Fig. 1 during the manufacturing process after insertion and before rolling in a perspective view and in a cross-sectional view;
- Fig. 3: shows an exemplary curved course of a double busbar device in a perspective view;
- Fig. 4: shows an exemplary embodiment of an end section of a double busbar device; and
- Fig. 5: shows an exemplary rolling device for carrying out a rolling process step in a perspective and cross-sectional view.

In the figures, identical or functionally identical features have the same reference symbols.

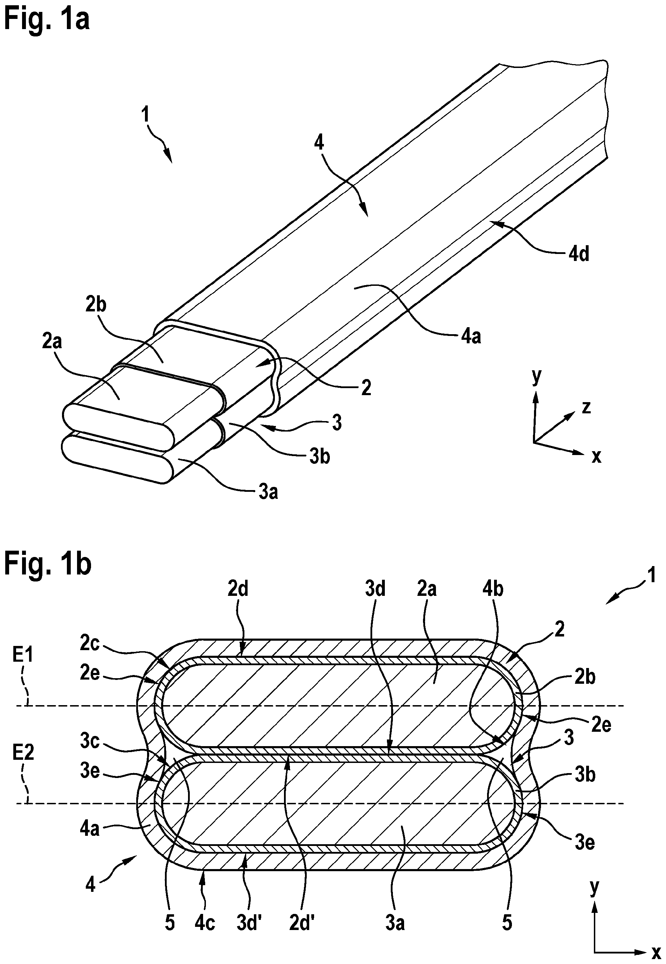

In Fig. 1), an exemplary embodiment of a double busbar device 1 is shown in subfigure 1a) in a perspective view and in subfigure 1b) in a cross-sectional view. The double busbar device 1 has a first busbar unit 2 with a first conductor core 2a and an insulating first sheath layer element 2b and a second busbar unit 3 with a second conductor core 3a and an insulating second sheath layer element 3b. The sheath layer elements 2b, 3b electrically insulate the conductor cores 2a, 3a and thus the busbars 2, 3 from each other. Both busbars 2, 3 follow the course of the double busbar device 1, in this case running along the z-direction. The conductor cores 2a, 3a are made of a solid metal such as aluminum and/or copper and are therefore rigid in contrast to a conductor core made of a conductor braid. The sheath layer elements 2b, 3b are made of plastic here.

The double busbar device 1 also has a summation shielding unit 4 with a tubular shielding element 4a made of solid metal, for example aluminum. The summation shielding unit 4 can also have other elements such as coatings or the like.

As shown in subfigure 1b), in a cross-section (here in the x-y plane) transverse to the course (along the z direction), first and second busbar units 2, 3 are in mechanical contact with an inner surface 4b of the summation shielding unit 4 with more than half of their respective outer surface 2c, 3c.

In the example shown, the busbar units 2, 3 are flat busbar units 2, 3 in which a width measured in the width direction (here along the x-direction) is a multiple of a thickness of the respective busbar unit 2, 3 measured in the thickness direction (here along the y-direction), for example more than a triple. The busbar units 2, 3 are arranged with their respective flat sides 2d, 2d', 3d, 3d' against each other here, i.e. they lie flat against one other in an x-z plane. The busbar units 2, 3 each have two opposite rounded side surfaces 2e, 3e in the cross-section transverse to the course. These are rounded circularly here, with a radius that is half the thickness of the respective busbar unit 2, 3.

Therefore, in the example shown, half of the outer surface 2c in the y-direction lies above the plane E1 (running parallel to the x-z plane) and half of the outer surface 3c in the y-direction lies below the plane E2 (also running parallel to the x-z plane). Since the summation shielding unit 4 with its inner surface 4b is also in mechanical contact with the busbar units 2, 3 between the two planes E1, E2, the busbar units 2, 3 are in mechanical contact with the summation shielding unit 4 with more than half of their respective outer surface 2c, 3c. Accordingly, the outer surface 4c is concave on its side surfaces (here essentially oriented in the positive and negative x-direction) in a central area, and the inner surface 4b is correspondingly convex. This results in a groove 4d in the perspective view of Fig. 1. The summation shield unit 4 thus embraces and clasps the busbar units 2, 3.

The maximized contact area between the outer surfaces 2c, 3c and the inner surface 4b not only leads to improved heat transfer, but also minimizes the thermally insulating cavity 5 in the summation shielding unit 4 and also increases the cohesion of the overall structure: The lateral press-fit of the tubular shielding element 4a not only increases an area available for friction between the individual units 2, 3, 4, but also increases an achievable contact pressure (here acting primarily along the y-direction) of the elements 2, 3, 4 against each other. The improved cohesion prevents undesirable effects such as wrinkling or tearing of the sheath layer elements 2a, 3a with the resulting disadvantageous consequences, for example when bending the double busbar device 1.

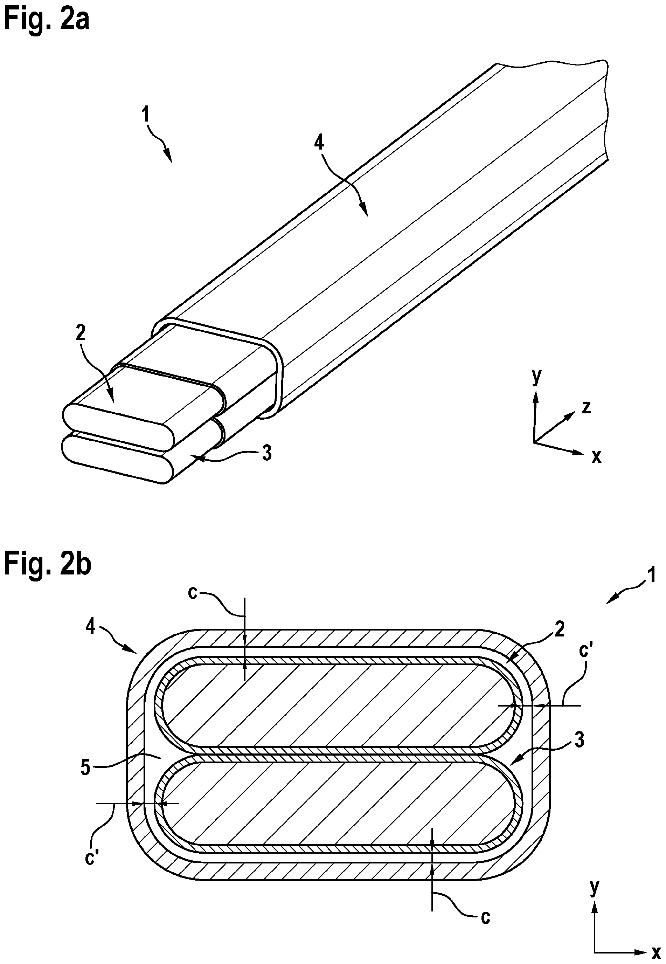

In Fig. 2), the embodiment of Fig. 1 is shown during the manufacturing process after the busbar units 2, 3 have been inserted into the summation shielding unit 4 and before the summation shielding unit 4 is rolled onto the busbar units 2, 3 in a perspective view in subfigure 2a) and in a cross-sectional view in subfigure 2b). Accordingly, a clearance c, c' between the two busbar units 2, 3 and the summation shielding unit 4 is greater than zero before rolling. In a first rolling operation, the clearance c, c' can be brought to zero (also stepwise) in at least one direction, for example the clearance c by pressing the summation shielding unit 4 from above and below (along the y-direction) into contact with the busbar units 2, 3 and/or the clearance c' by pressing the summation shielding unit 4 from the sides (along the x-direction) into contact with the busbar units 2, 3.

Ideally, the rolling is carried out in a first step, a first rolling, flat, so that the outer surface 4a in the (x-y) cross-section is convex (at the edges) and straight (in between), and in a second step, a second rolling, contoured, so that the outer surface 4a in the (x-y) cross-section is also concave, for example with the groove 4d.

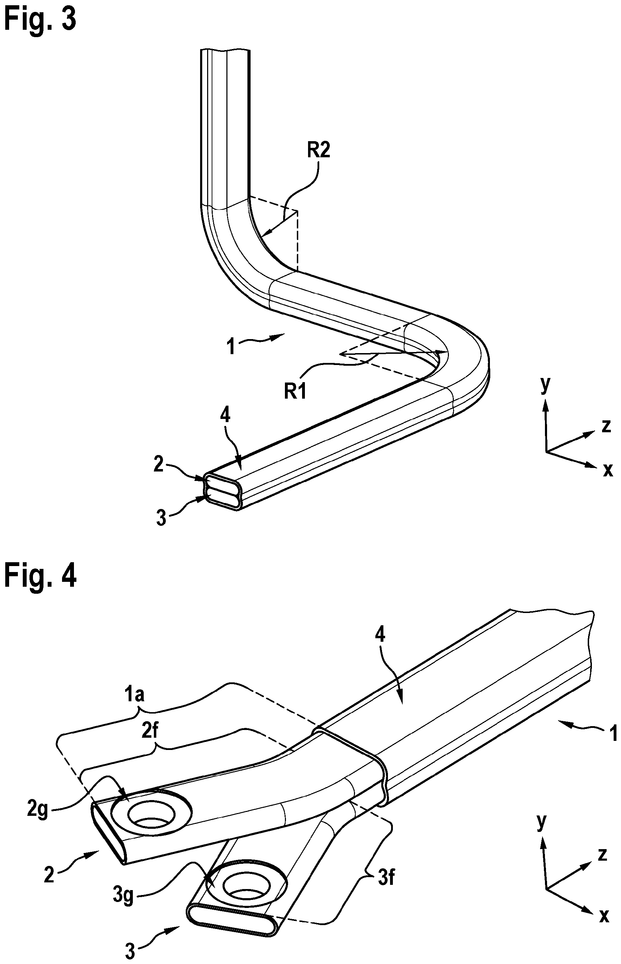

As shown in Fig. 3), a double busbar device 1 of this type can be used to produce curves with several curves or roundings R1, R2 in a simple manner with a low probability of error. An example of a curve with a first 90° curve R1 in the x-z plane and a second 90° curve in the x-y plane is shown.

Figure 4) shows the first and here also the second busbar unit 2, 3 in an embodiment with one (or two) end regions 1a of the double busbar device 1, in which the busbar units 2, 3 project beyond the summation shielding unit 4 and are bent away from the respective other busbar unit 3, 2 in one plane, here the (x-z) width plane, with a respective end section 2f, 3f. A contact surface 2g, 3g is arranged in the respective end section 2f, 3f, which is designed to make electrical contact with the respective busbar unit 2, 3.

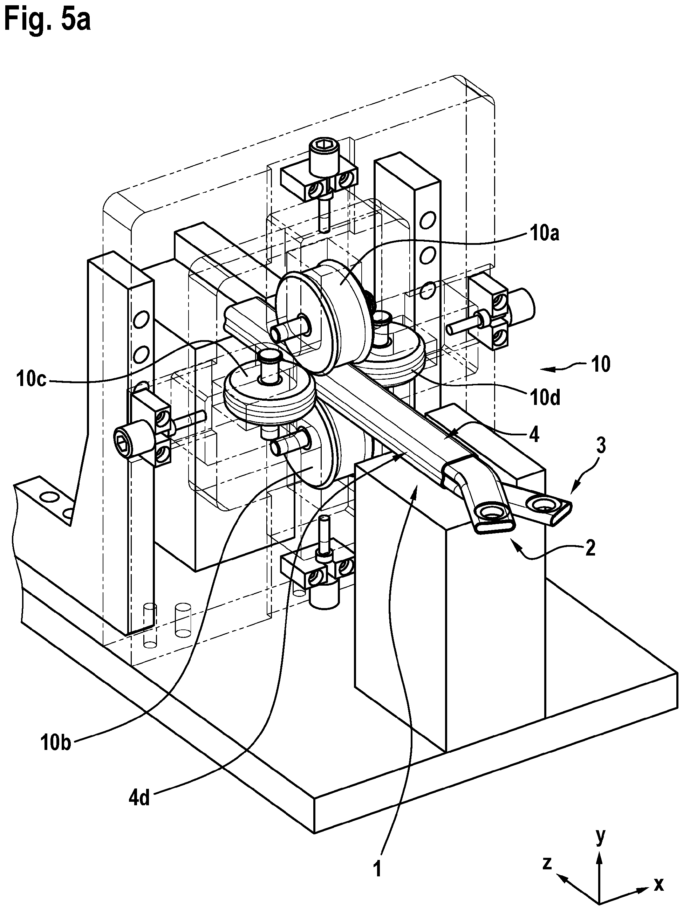

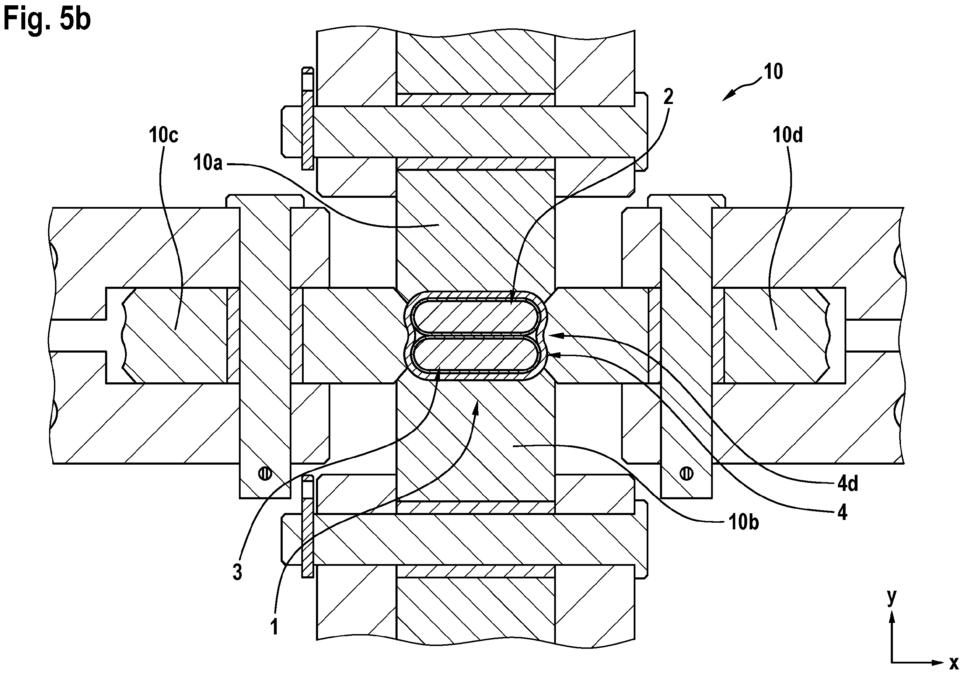

In Fig. 5), an exemplary rolling device 10 for carrying out a rolling process step is shown in Fig. 5a) in a perspective view and in Fig. 5b) in a cross-sectional view. The rolling device 10 has a plurality of rollers 10a, 10b, 10c, 10d, by means of which the summation shielding unit 4 is pressed against the busbar units 2, 3 from above and below (along the y-direction, rollers 10a, 10b) and from the sides (along the x-direction, rollers 10c, 10d). In the example shown, two rollers 10a, 10b are essentially flat, so that the summation shielding unit 4 is pressed against the busbar units 2, 3 from above and below with a flat and concave outer surface 4a (without convex area). In contrast, two rollers 10c, 10d are essentially contoured, so that the summation shielding unit 4 is pressed against the busbar units 2, 3 from the sides with at least a convex outer surface 4a in some areas, in this case with the groove 4d.

In the example shown, an improved, in particular a simplified, heavy-duty current routing is thus realized.

## Claims

1. Double busbar device (1) for a vehicle, in particular for an electric vehicle, having at least
- a first busbar unit (2) which has an insulating first sheath layer element (2b) and
- a second busbar unit (3), which has an insulating second sheath layer element (3b);
- wherein the first and second busbar units (2, 3) are arranged insulated from one another at least by means of the sheath layer elements (2b, 3b) and follow a course of the double busbar device (1);
**characterized by**
- a summation shielding unit (4) with a tubular shielding element (4a) made of solid metal; wherein
- in a cross-section transverse to the course of the double busbar device (1), the first and the second busbar unit (2, 3) each have their outer surface (2c, 3c) in mechanical contact with an inner surface (4b) of the summation shielding unit (4) over a large area.

2. Double busbar device (1) according to the preceding claim,
**characterized in that**
the first and the second busbar unit (2, 3) each have 50% or more than 50% of their outer surface (2c, 3c) in mechanical contact with an inner surface (4b) of the summation shielding unit (4).

3. Double busbar device (1) according to one of the preceding claims,
**characterized in that**
the busbar units (2, 3) are flat busbar units (2, 3), in particular a width of the respective busbar unit (2, 3) measured transversely to the course in a width direction is at least twice as large as a thickness of the respective busbar unit (2, 3) measured transversely to the course and width in a thickness direction, preferably at least three times as large or at least four times as large.

4. Double busbar device (1) according to the preceding claim,
**characterized in that**
the busbar units (2, 3) are arranged with a respective flat side (2d', 3d) at one another which is oriented along the thickness direction.

5. Double busbar device (1) according to one of the two preceding claims,
**characterized in that**
the busbar units (2, 3) each have two rounded side surfaces (2e, 3e) arranged opposite to each other in the cross-section transverse to the course, which are in particular rounded in a circle with a radius which is half the respective thickness.

6. Double busbar device (1) according to one of the preceding claims,
**characterized in that**
first and/or second busbar unit (2, 3) in one or two end regions (1a) of the double busbar device (1), in which the busbar units (2, 3) project beyond the summation shielding unit (4), is bent in a plane, preferably a width plane, with a respective end section (2f, 3f) away from the respective other busbar unit (2, 3).

7. Double busbar device (1) according to the preceding claim,
**characterized in that**
a contact surface (2g, 3g) is arranged in the end section (2f, 3f), in particular with a contact-surface insert such as a contact-surface rivet.

8. Double busbar device (1) according to one of the preceding claims,
**characterized in that**
the course comprises one or more curves (R1, R2) in one or more planes.

9. Double busbar device (1) according to one of the preceding claims,
**characterized in that**
the summation shielding unit (4) is, in the cross-section transverse to the course, in mechanical contact with more than half of the outer surface (2c, 3c) of the first and second busbar unit (2, 3) with its inner surface (4b) over a large part of its length along the course, in particular over at least 80% of its length along the course, preferably over the entire length along the course.

10. Double busbar device (1) according to one of the preceding claims,
**characterized in that**
the summing screen unit (4) has, along the course, a length of at least 50 cm, preferably at least 100 cm.

11. Vehicle, in particular electric vehicle with a double busbar device (1) according to one of the preceding claims.

12. A vehicle according to the preceding claim, wherein the double busbar device (1) is mounted outside a battery arrangement.

13. Method for producing a double busbar device (1) for a vehicle, in particular for an electric vehicle, the double busbar device (1) having a first busbar unit (2) with an insulating first sheath layer element (2b) and a second busbar unit (3) insulated from the first busbar unit (2) with an insulating second sheath layer element (3b) and a summation shielding unit (4) with a tubular shielding element (4a) made of solid metal, having the method steps:
- providing the first and the second busbar unit (2, 3);
- inserting the two busbar units (2, 3) into the tubular shielding element (4a) made of solid metal, there being a clearance (c, c') between the busbar units (2, 3) and the tubular shielding element (4a);
- first rolling of the tubular shielding element (4a) onto the busbar units (2, 3), in which the play (c, c') between busbar units (2, 3) and tubular shielding element (4a) is reduced to zero in at least one direction, so that in a cross-section transverse to a course of the double busbar device (1) a first part of the inner surface (4b) of the summation shielding unit (4) bears against the busbar units (2, 3);
- second rolling of the tubular shielding element (4a) against the busbar units (2, 3), in which a further part of the inner surface (4b) of the summation shielding unit (4), which differs from the first part, is brought into contact with the busbar units (2, 3).

14. Method according to the preceding claim,
**characterized in that**
the further part of the inner surface (4b) is brought into contact with the busbar units (2, 3) during the second rolling in regions whose orientations run towards one another.

15. Method according to one of the two preceding claims,
**characterized in that**,
after the first and second rolling, the course of the double busbar device (1) is adapted by bending to a predetermined course with one or more curves (R1, R2) in one or more planes.
